# EUROPEAN PATENT APPLICATION

(11) **EP 4 817 404 A1**
(43) Date of publication of application: **07.10.2026**
(21) Application number: 24897880.1
(22) Date of filing: 18.10.2024
(51) Int. Cl.: A01G 9/18, B01D 61/44, B01D 53/14, C01B 32/50

(54) **CARBON DIOXIDE ENRICHMENT SYSTEM AND CARBON DIOXIDE ENRICHMENT METHOD**

(30) Priority: 28.11.2023 KR 20230168304
(71) Applicant: POSCO Holdings Inc., Pohang-si, Gyeongsangbuk-do 37859 (KR)
(72) Inventor: LEE, Man-Su, Pohang-si, Gyeongsangbuk-do 37877 (KR); CHOI, Jeong-Ho, Pohang-si, Gyeongsangbuk-do 37877 (KR); AHN, Chi-Kyu, Pohang-si, Gyeongsangbuk-do 37877 (KR)
(74) Representative: Pfenning, Meinig & Partner mbB
(86) International application number: PCT/KR2024/015917
(87) International publication number: WO 2025/116282

(57) **Abstract**

A carbon dioxide enrichment system according to exemplary embodiments of the present invention can effectively collect carbon dioxide in the atmosphere to supply same to a plant cultivation facility. Accordingly, the efficiency of carbon dioxide enrichment can be improved.

## Description

### Technical Field

The present disclosure relates to a carbon dioxide enrichment system and a carbon dioxide enrichment method.

More specifically, the present disclosure relates to a carbon dioxide enrichment system and a carbon dioxide enrichment method that may directly collect carbon dioxide from the atmosphere to supply the same to a horticultural facility or an agricultural facility.

### Background Art

Carbon dioxide enrichment for crop production mainly uses liquefied carbonic acid or combusts fossil fuels to supply carbon dioxide, maintaining an appropriate concentration of the carbon dioxide for each crop type.

A method of using liquefied carbonic acid may collect carbon dioxide from a by-product gas in which the carbon dioxide is discharged, from a power plant, or the like, and may refine, compress, liquefy, and transport the collected carbon dioxide for use. This method may inevitably incur high costs due to not only collection costs but also liquefaction and transportation costs.

A method of combusting fossil fuels to supply carbon dioxide may be relatively economical in winter when heating is performed, but there may be a time mismatch in that heating is mainly required at night and carbon dioxide enrichment should be performed mainly during the day. In addition, there is a method of storing heat generated during combustion and using the same at night, but it is still determined that efficiency will be low due to energy conversion or the like.

To solve the problems, research into a carbon dioxide enrichment system that can directly collect carbon dioxide from the atmosphere, to supply the same to a plant cultivation facility such as a horticultural facility, an agricultural facility, and the like, is continuing.

(Patent Document 1) Korea Patent Publication No. 10-2013-0083217.

### Disclosure of Invention

### Technical Problem

The technical idea of the present disclosure aims to provide a carbon dioxide enrichment system capable of directly collecting carbon dioxide from a source gas such as atmospheric air or the like, and supplying the same to a plant cultivation facility.

The scope of the present disclosure is not limited to the above-described scope. Those skilled in the art will readily understand the additional objectives of the present disclosure from the overall description of the present disclosure.

### Solution to Problem

According to example embodiments of the present disclosure, a carbon dioxide enrichment system may be provided. The carbon dioxide enrichment system may include an electrodialysis device configured to separate a salt solution into an acidic solution and a basic solution; an absorption device configured to react the basic solution with a source gas containing carbon dioxide, and to discharge an absorption solution in which the carbon dioxide is absorbed from the source gas; a separation device configured to react the absorption solution and the acidic solution to separate and discharge the carbon dioxide and the salt solution, and to supply the separated and discharged carbon dioxide to a plant cultivation facility; the plant cultivation facility receiving the carbon dioxide from the separation device; and a controller configured to control the separation and discharge of the carbon dioxide, based on environmental conditions of the plant cultivation facility, wherein the salt solution discharged from the separation device is circulated to the electrodialysis device.

The salt solution may include KCl, KNO₃, K₂SO₄, or a combination thereof, and water (H₂O).

A supply temperature of the salt solution may be 20 to 50°C.

The acidic solution may include HCl, HNO₃, H₂SO₄, or a combination thereof.

The basic solution may include KOH.

The electrodialysis device may discharge a diluted solution having a lower salt concentration than the salt solution, and supply the diluted solution to the plant cultivation facility.

The electrodialysis device may discharge a diluted solution having a lower salt concentration than the salt solution, and the diluted solution may be circulated to the absorption device and the separation device.

The electrodialysis device may be a bipolar electrodialysis device including a bipolar membrane.

The controller may be configured to determine whether to operate the electrodialysis device, based on the environmental conditions of the plant cultivation facility.

The controller may be configured to determine whether to operate the electrodialysis device by comparing a carbon dioxide concentration in the plant cultivation facility and a preset carbon dioxide concentration.

The carbon dioxide enrichment system may further include an acidic solution storage tank fluidly connected to the electrodialysis device and the separation device, respectively, and an opening/closing valve disposed between the acidic solution storage tank and the separation device and configured to control flow of the acidic solution supplied to the separation device by an opening/closing operation, and the controller may be configured to control the opening/closing operation of the opening/closing valve according to the environmental conditions of the plant cultivation facility.

According to further example embodiments of the present disclosure, a carbon dioxide enrichment method may be provided. The carbon dioxide enrichment method may be a carbon dioxide enrichment method for separating carbon dioxide from an absorption solution formed by reacting a source gas containing the carbon dioxide with a basic solution, and supplying the separated carbon dioxide to a plant cultivation facility, and may include determining whether to separate the carbon dioxide, based on environmental conditions of the plant cultivation facility; supplying the source gas and the basic solution to an absorption device to form the absorption solution; supplying the acidic solution and the absorption solution to a separation device to separate a salt solution and the carbon dioxide from the absorption solution; supplying the salt solution to an electrodialysis device to form the basic solution and an acidic solution, wherein the basic solution is supplied to the absorption device, and the acidic solution is supplied to the separation device; and supplying the separated carbon dioxide to the plant cultivation facility, wherein separation of the carbon dioxide is controlled by an operation of the electrodialysis device or supply of the acidic solution to the separation device.

### Advantageous Effects of Invention

A carbon dioxide enrichment system according to example embodiments of the present disclosure may effectively collect carbon dioxide from the atmosphere to supply the same to a plant cultivation facility. Therefore, efficiency of carbon dioxide enrichment may be improved.

Various advantages and effects of the present disclosure are not limited to the above-described contents, and will be more readily understood when specific embodiments of the present disclosure are described.

### Brief Description of Drawings

FIG. 1 is a process diagram illustrating a carbon dioxide enrichment system according to example embodiments.
FIG. 2 is a schematic diagram illustrating an electrodialysis device.
FIG. 3 is a process diagram illustrating a carbon dioxide enrichment system according to other example embodiments.
FIG. 4 is a process diagram illustrating a carbon dioxide enrichment system according to other example embodiments.
FIG. 5 is a process diagram illustrating a carbon dioxide enrichment system according to other example embodiments.

### Best Mode for the Invention

Hereinafter, preferred embodiments of the present disclosure will be described in detail with reference to the attached drawings. Prior thereto, it should be noted that terms and words used in the present specification and claims should not be construed as limited to conventional or dictionary meanings thereof. Based on the principle that inventors may appropriately define the concepts of terms to best explain the inventions, they should be construed as meanings and concepts consistent with the technical spirit of the present disclosure.

Hereinafter, when describing with reference to the drawings, identical or corresponding components may be assigned the same reference numerals, and redundant descriptions thereof will be omitted.

In the following examples, terms such as first, second, or the like may not be used in a limiting sense, but rather to distinguish one component from another.

In the following examples, a singular expression may include a plural expression, unless the context clearly indicates otherwise.

In the following examples, terms such as including, having, or the like, may indicate the presence of a feature or component described in the specification, but do not preclude possibility of adding one or more other features or components.

For convenience of explanation, components in the drawings may be exaggerated or reduced in size. For example, a size and a thickness of each of the components illustrated in the drawings may be arbitrarily indicated for convenience of explanation, and the present disclosure is not necessarily limited to the illustrated embodiments.

When a particular embodiment is implemented differently, a specific process order may be performed differently from an order described. For example, two processes described in succession may be performed substantially simultaneously or in a reverse order of the described order.

Furthermore, when describing the present disclosure, detailed descriptions of known components or functions may be omitted if they may be deemed to obscure the gist of the present disclosure.

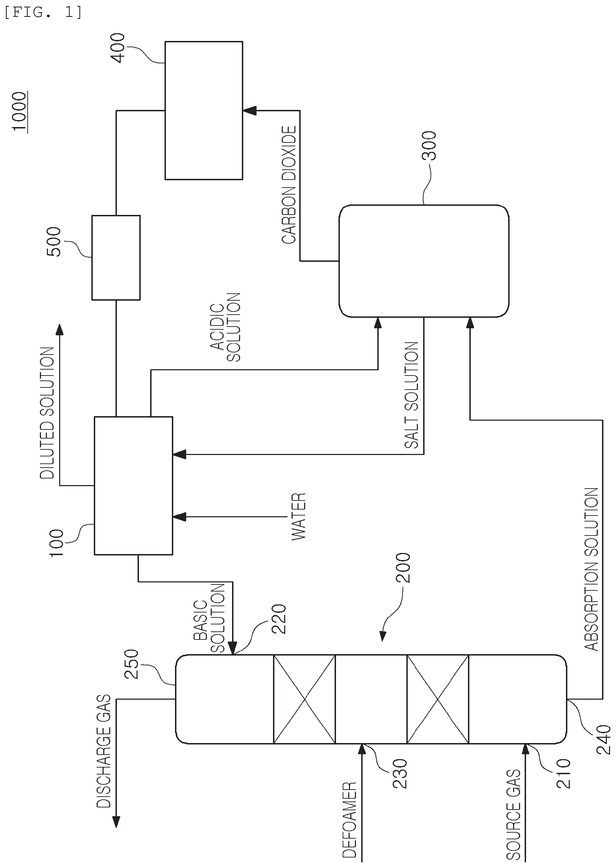

FIG. 1 is a process diagram illustrating a carbon dioxide enrichment system according to example embodiments.

Referring to FIG. 1, a carbon dioxide enrichment system (1000) includes an electrodialysis device (100), an absorption device (200), a separation device (300), a plant cultivation facility (400), and a controller (500).

The electrodialysis device (100) may be configured to separate a salt solution into an acidic solution and a basic solution. In the present disclosure, the salt solution refers to a solution containing an ion-bonding compound produced by an acid-base reaction, and a solution containing a salt with strong electrolyte properties that largely dissociate in water.

As a non-limiting example, pH of the salt solution may range from 3 to 5. pH of the basic solution may be 13 or higher. pH of the acidic solution may be 1 or lower.

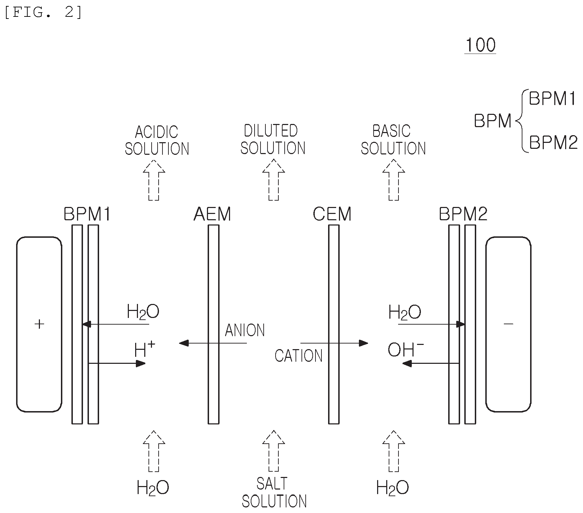

FIG. 2 is a schematic diagram illustrating an electrodialysis device (100).

Referring to FIG. 2, an electrodialysis device (100) may be a bipolar electrodialysis device including a bipolar membrane.

The electrodialysis device (100) may include a bipolar membrane (BPM), an anion-exchange membrane (AEM), a cation-exchange membrane (CEM), a positive electrode (+), and a negative electrode (-). In addition, the electrodialysis device (100) may further include a power source (not illustrated) capable of supplying electricity to separate a salt solution.

As a non-limiting example, the positive electrode (+) and the negative electrode (-) may be located on opposite end portions of the electrodialysis device (100). The bipolar membrane (BPM) may be located adjacent to the positive electrode (+) or the negative electrode (-). The bipolar membrane (BPM) may include a first bipolar membrane (BPM1) located adjacent to the positive electrode (+), and a second bipolar membrane (BPM2) located adjacent to the negative electrode (-). An anion-exchange membrane (AEM) and a cation-exchange membrane (CEM) may be located to be spaced apart from each other by a predetermined distance between the first bipolar membrane (BPM1) and the second bipolar membrane (BPM2). The power source may be electrically connected to the positive electrode (+) and the negative electrode (-).

The salt solution may be supplied between the anion-exchange membrane (AEM) and the cation-exchange membrane (CEM). Water may be supplied between the first bipolar membrane (BPM1) and the anion-exchange membrane (AEM). Water (e.g., make-up water) may be supplied between the second bipolar membrane (BPM2) and the cation-exchange membrane (CEM). As a non-limiting example, a diluted salt solution may be supplied between the first bipolar membrane (BPM1) and the anion-exchange membrane (AEM). The diluted salt solution may be supplied between the second bipolar membrane (BPM2) and the cation-exchange membrane (CEM). In this case, the diluted salt solution may be a diluted salt solution having a relatively low salt concentration. The following description focuses on a case in which water is supplied separately from the salt solution.

By supplying electricity to the electrodialysis device (100), the salt solution may be separated into an acidic solution and a basic solution. When electricity is supplied to the positive electrode (+) and negative electrode (-) using the power source, anions within the electrodialysis device (100) may move toward the positive electrode (+). Additionally, cations within the electrodialysis device (100) may move toward the negative electrode (-). More specifically, when electricity is applied to the electrodialysis device (100), water (H₂O) may be decomposed into a hydrogen ion (H⁺) and a hydroxide ion (OH⁻) across the bipolar membrane. Anions contained in the salt solution may pass through the anion-exchange membrane (AEM), and may be bonded to the hydrogen ion (H⁺) to form an acidic solution. Cations contained in the salt solution may pass through the cation-exchange membrane (CEM), and may be bonded to the hydroxide ion (OH⁻) to form a basic solution. Movement of the ions may lower a salt concentration of the salt solution supplied between the anion-exchange membrane (AEM) and the cation-exchange membrane (CEM), to form a diluted solution. As a non-limiting example, a salt concentration of the diluted solution may be 0.05 to 1% of the salt solution.

A supply temperature of the salt solution may be 20 to 50°C.

When the supply temperature of the salt solution is below 20°C, salt may precipitate in the solution. Furthermore, a decomposition efficiency of the salt solution of the electrodialysis device (100) may be reduced. When the supply temperature of the salt solution exceeds 50°C, deformation in membrane, changes in electrical conductivity, or the like may occur, causing local or global pH changes in the discharged solutions. In this case, stable electrodialysis control may become difficult.

According to example embodiments, the salt solution and the basic solution may include potassium ions (K⁺). Non-limiting examples may include the salt solution, KCl, KNO₃, K₂SO₄, or a combination thereof, and water (H₂O). The basic solution may include KOH. The diluted solution may have a composition substantially identical to the salt solution, except for the salt concentration.

The carbon dioxide may react with the basic solution to be transported in a form of carbonate. The carbonate may be at least one of carbonate (CO₃²⁻) or bicarbonate (HCO₃⁻). Conventionally, basic solutions containing NaOH were primarily used for directly collecting carbon dioxide. This may be because sodium (Na⁺) ions may be readily available through a process such as seawater electrolysis or the like. When collecting carbon dioxide with NaOH, the carbon dioxide may be stored in a form of Na₂CO₃ or NaHCO₃. However, due to low solubility of NaHCO₃, it may be difficult to increase a salt concentration, resulting in low carbon dioxide collect efficiency. This results in a low amount of carbon dioxide collected per weight of the basic solution, reducing process efficiency. Furthermore, when used in cold climates, a problem of crystal precipitation may occur.

When collecting carbon dioxide using the basic solution, according to example embodiments of the present disclosure, carbon dioxide may be absorbed in a form of K₂CO₃ or KHCO₃. Salts containing the potassium ions (K⁺) (K₂CO₃ or KHCO₃) may have higher solubility than NaHCO₃, to collect a greater amount of carbon dioxide per weight of basic solution.

According to example embodiments, the basic solution may absorb carbon dioxide from the source gas by reacting with carbon dioxide as illustrated in the following Reaction Schemes:

[Reaction Scheme 1] 2KOH + CO₂ → K₂CO₃ + H₂O

[Reaction Scheme 2] K₂CO₃ + CO₂ + H₂O → 2KHCO₃

The basic solution may contain 5 to 25 wt% KOH, based on a total weight of the basic solution. When a KOH content in the basic solution is less than 5 wt%, carbon dioxide absorption efficiency may be deteriorated. As the KOH content in the basic solution increases, the carbon dioxide absorption efficiency may be improved. However, when the KOH content in the basic solution increases excessively, problems such as excessive formation of KHCO₃ or the like to be precipitated in crystal form may occur. The remainder of the basic solution, excluding KOH, may contain water (H₂O) and unavoidable impurities.

According to example embodiments, the acidic solution may include HCl, HNO₃, H₂SO₄, or a combination thereof.

Through the process described above, the electrodialysis device (100) may receive the salt solution, and may discharge the basic solution, the acidic solution, and the diluted solution.

According to example embodiments, an electrodialysis device (100) may receive a salt solution from a separation device (300). The electrodialysis device (100) may supply a basic solution to an absorption device (200). The electrodialysis device (100) may supply an acidic solution to the separation device (300). As above, solutions to be used may be circulated in a carbon dioxide enrichment system (1000) to improve a carbon dioxide collect efficiency of the carbon dioxide enrichment system (1000).

The absorption device (200) may be configured to absorb carbon dioxide contained in a source gas with the basic solution, and to discharge an absorption solution.

When a plant cultivation facility is suitably installed, the source gas may include exhaust gas generated from factories or the like surrounding the plant cultivation facility, atmospheric air, or a combination thereof. Non-limiting examples of the source gas may include power generation exhaust gas, incinerator exhaust gas, steelmaking by-product gas, atmospheric air, or a combination thereof. More specifically, the source gas may be atmospheric air.

In example embodiments, the source gas may include carbon dioxide, nitrogen, carbon monoxide, methane, oxygen, and hydrogen. In an embodiment, the source gas may include about 0.04 to about 30 vol% carbon dioxide, based on a total volume of the source gas.

The absorption device (200) may include inlets (210, 220, 230) through which feedstocks for carbon dioxide absorption reaction are supplied, and outlets (240, 250) through which reaction products are discharged.

The source gas may be supplied to the absorption device (200) through a first inlet (210). The first inlet (210) is not particularly limited as long as it may supply the source gas into the absorption device (200). As a non-limiting example, the first inlet (210) may include a blower or a fan.

The basic solution may be supplied to the absorption device (200) through a second inlet (220). The second inlet (220) may be located above the first inlet (210). As a result, the basic solution supplied to the second inlet (220) may flow in a gravity direction, and may absorb the carbon dioxide contained in the source gas by coming into contact with the source gas flowing upwardly from the first inlet (210). The carbon dioxide absorption reaction may be as illustrated in the Reaction Schemes described above. After a reaction between the source gas and the basic solution, the absorption solution containing carbon dioxide in a form of a carbonate may flow to a lower end of the absorption device (200), and a discharge gas from which carbon dioxide has been removed may flow to an upper end of the absorption device (200). As a non-limiting example, the second inlet (220) may be fluidly connected to a spray nozzle and a pipe extending into the absorption device (200). The second inlet (220) may be fluidly connected to the electrodialysis device (100) through a pipeline or the like.

A defoamer may be supplied to the absorption device (200) through a third inlet (230). As the source gas and the basic solution react, foam may be generated in the absorption device (200). To minimize the generation of such foam, the defoamer may be selectively supplied. The third inlet (230) may be located above the first inlet (210). The third inlet (230) may be fluidly connected to a spray nozzle and a pipe extending into the absorption device (200). The third inlet (230) may be fluidly connected to an external defoamer storage tank (not illustrated) through a pipeline or the like. As a non-limiting example, the defoamer may be added to an intermediate portion of a basic solution stream flowing from the electrodialysis device (100) to the second inlet (220). In this case, the third inlet (230) may be omitted.

A first outlet (240) may be configured to discharge the absorption solution. The first outlet (240) may be located on a lowermost end of the absorption device (200), and may discharge the absorption solution to an outside of the absorption device (200). As a non-limiting example, the first outlet (240) may be a port fluidly connected to the separation device (300) via a pipeline or the like, including a valve or the like. As a non-limiting example, pH of the absorption solution may be in a pH range of 9 to 11. The absorption solution may include one or more of K₂CO₃ or KHCO₃.

A second outlet (250) may be configured to discharge the discharge gas to the outside of the absorption device (200). The second outlet (250) may be located on an uppermost end of the absorption device (200), and may discharge the discharge gas to the outside of the absorption device (200). The second outlet (250) is not particularly limited as long as it may easily discharge the discharge gas. As a non-limiting example, the second outlet (250) may include an induced draft fan.

As a non-limiting example, the absorption device (200) may be any one of a packing column, a tray column, a spray column, a bubble column, or a combination thereof.

As described above, the absorption device (200) may receive the basic solution and the source gas, and may discharge the absorption solution and the discharge gas. The defoamer may also be supplied, as necessary. As a non-limiting example, the absorption device (200) may absorb about 30 to about 90% of the carbon dioxide contained in the source gas.

According to example embodiments, the absorption device (200) may receive the basic solution from the electrodialysis device (100). The absorption device (200) may supply the absorption solution to the separation device (300).

The separation device (300) may be configured to react the absorption solution and the acidic solution to discharge the carbon dioxide and the salt solution.

The absorption solution supplied to the separation device (300) may be supplied from the absorption device (200). The acidic solution supplied to the separation device (300) may be supplied from the electrodialysis device (100). To this end, the separation device (300) may be fluidly connected to the electrodialysis device (100) and the absorption device (200) via a pipeline including a valve and a pump.

According to example embodiments, the separation device (300) may react the absorption solution and the acidic solution as described in the following Reaction Schemes to separate the carbon dioxide. Additionally, the salt solution may be formed.

[Reaction Scheme 3] KHCO₃ + HNO₃ → KNO₃ + H₂O + CO₂

[Reaction Scheme 4] K₂CO₃ + 2HNO₃ → 2KNO₃ + 2H₂O + CO₂

[Reaction Scheme 5] KHCO₃ + HCl → KCl + H₂O + CO₂

[Reaction Scheme 6] K₂CO₃ + 2HCl → 2KCl + 2H₂O + CO₂

[Reaction Scheme 7] 2KHCO₃ + H₂SO₄ → K₂SO₄ + 2H₂O + 2CO₂

[Reaction Formula 8] K₂CO₃ + H₂SO₄ → K₂SO₄ + H₂O + CO₂

As described above, the separation device (300) may receive the absorption solution and the acidic solution, and may discharge the carbon dioxide and the salt solution.

According to example embodiments, the separation device (300) may separate approximately 90% or more of the carbon dioxide contained in the absorption solution. More specifically, the separation device (300) may separate approximately 99% or more of the carbon dioxide contained in the absorption solution. The carbon dioxide separated from the absorption solution may be discharged as a gas phase from an upper end of the separation device (300).

The separation device (300) may be configured to supply the separated and discharged carbon dioxide to a plant cultivation facility. To this end, the separation device (300) may be fluidly connected to the plant cultivation facility (400). As a non-limiting example, the separated and discharged carbon dioxide may be supplied to the plant cultivation facility (400) using an air duct (not illustrated) and an air pump (not illustrated) configured to fluidly connect the separation device (300) and the plant cultivation facility (400).

The plant cultivation facility (400) may receive the carbon dioxide from the separation device (300). The plant cultivation facility (400) is not particularly limited as long as it may appropriately cultivate plants such as crops and the like of a certain size. As a non-limiting example, the plant cultivation facility (400) may be a sealed structure capable of cultivating the plants therein. Alternatively, the plant cultivation facility (400) may be a vinyl greenhouse or a glass greenhouse.

The plant cultivation facility (400) may include a plurality of sensors to sense environmental conditions of the plant cultivation facility (400). The environmental conditions of the plant cultivation facility (400) may include one or more of the following: intensity of light irradiated to the plant cultivation facility (400), a time of day, or an internal carbon dioxide concentration of the plant cultivation facility (400). As an example, the environmental conditions of the plant cultivation facility (400) may be the internal carbon dioxide concentration of the plant cultivation facility (400).

As a non-limiting example, the plant cultivation facility (400) may include a carbon dioxide concentration sensor. The plant cultivation facility (400) may include a light intensity sensor.

The controller (500) may be configured to control separation and discharge of carbon dioxide, based on the environmental conditions of the plant cultivation facility (400).

According to example embodiments, an operation of the electrodialysis device (100) may be determined to control the separation and discharge of carbon dioxide. To this end, the controller (500) may be configured to determine whether to operate the electrodialysis device (100), based on the environmental conditions of the plant cultivation facility (400).

The electrodialysis device (100) may be electrically controlled, making it easier to control than the absorption device (200) and the separation device (300). Furthermore, the electrodialysis device (100) may produce the basic solution for absorbing carbon dioxide, and the acidic solution for regenerating carbon dioxide. Therefore, by controlling the electrodialysis device (100), a degree of absorption of carbon dioxide by the absorption device (200) and a degree of emission of carbon dioxide by the separation device (300) may be controlled. Furthermore, the carbon dioxide concentration in the plant cultivation facility (400) may be easily controlled. Furthermore, by operating the electrodialysis device (100) only during times or under light conditions suitable for plant growth, thereby supplying carbon dioxide to the plant cultivation facility (400), a plant growth efficiency of the plant cultivation facility (400) may be improved.

According to example embodiments, the controller (500) may be configured to determine whether to operate the electrodialysis device (100) by comparing a preset carbon dioxide concentration with the carbon dioxide concentration in the plant cultivation facility (400).

As an example, the controller (500) may stop the operation of the electrodialysis device (100), when the carbon dioxide concentration in the plant cultivation facility (400) is higher than the preset carbon dioxide concentration. More specifically, the controller (500) may cut off electricity applied to the electrodialysis device (100), when the carbon dioxide concentration in the plant cultivation facility (400) is higher than the preset carbon dioxide concentration.

As another example, the controller (500) may operate the electrodialysis device (100), when the carbon dioxide concentration in the plant cultivation facility (400) is lower than the preset carbon dioxide concentration. More specifically, the controller (500) may apply electricity to a power source of the electrodialysis device (100), when the carbon dioxide concentration in the plant cultivation facility (400) is lower than the preset carbon dioxide concentration.

The preset carbon dioxide concentration may be appropriately set, depending on a type of a plant grown in the plant cultivation facility (400). As an example, the preset carbon dioxide concentration may be in the concentration range of 1,000 to 2,000 ppm.

The carbon dioxide enrichment system (1000) may operate the electrodialysis device (100) only when necessary. Therefore, a separate storage tank for storing the acidic solution generated in the electrodialysis device (100) may be omitted. This may increase ease of maintenance of the carbon dioxide enrichment system (1000), and may simplify a connection line design between each device.

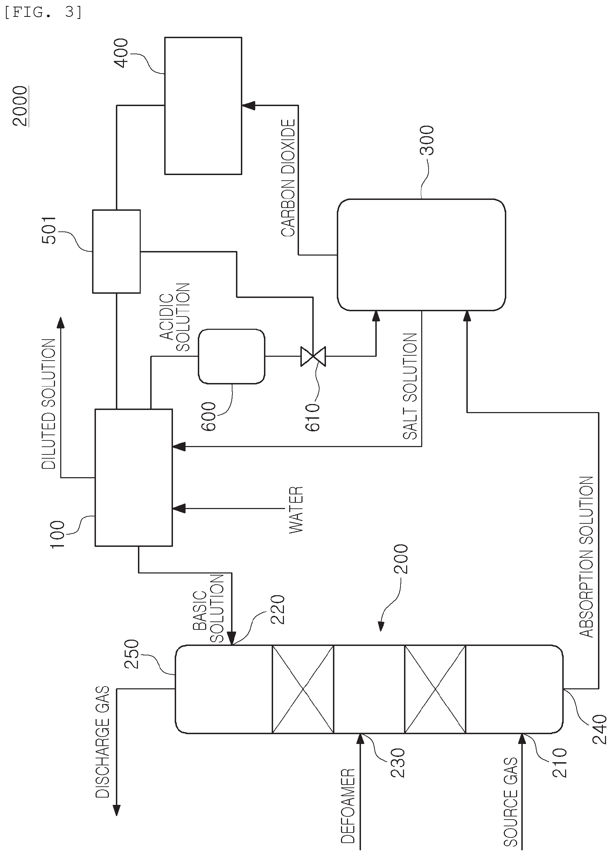

FIG. 3 is a process diagram illustrating a carbon dioxide enrichment system (2000) according to other example embodiments.

Referring to FIG. 3, a carbon dioxide enrichment system (2000) may include an acidic solution storage tank (600) and an opening/closing valve (610).

The acidic solution storage tank (600) may be fluidly connected to an electrodialysis device (100). The acidic solution storage tank (600) may be fluidly connected to a separation device (300). The acidic solution storage tank (600) may be configured to store an acidic solution formed in the electrodialysis device (100).

The opening/closing valve (610) may be configured to be located between the acidic solution storage tank (600) and the separation device (300), to control flow of the acidic solution supplied to the separation device (300) by an opening/closing operation.

According to example embodiments, an opening/closing operation of the opening/closing valve (610) may be adjusted to control separation and discharge of carbon dioxide. To this end, a controller (501) may be configured to control the opening/closing operation of the opening/closing valve (610) according to environmental conditions of a plant cultivation facility (400).

As an example, when a carbon dioxide concentration in the plant cultivation facility (400) is lower than a preset carbon dioxide concentration, the controller (501) may open the opening/closing valve (610) to supply the acidic solution to the separation device (300). As another example, when the carbon dioxide concentration in the plant cultivation facility (400) is higher than the preset carbon dioxide concentration, the controller (501) may close the opening/closing valve (610) to block the acidic solution supplied to the separation device (300).

As above, the carbon dioxide enrichment system (2000) may utilize the stored acidic solution, enabling immediate production of carbon dioxide. Furthermore, the electrodialysis device (100) may be operated only during times (e.g., late at night) in which electricity costs are low, to store the acidic solution in the acidic solution storage tank (600). This may reduce overall operating costs of the carbon dioxide enrichment system (2000).

In addition, the description of components substantially overlapping those of the carbon dioxide enrichment system according to FIGS. 1 and 2 may be equally applied to the carbon dioxide enrichment system according to FIG. 3, and therefore, a detailed description thereof will be omitted.

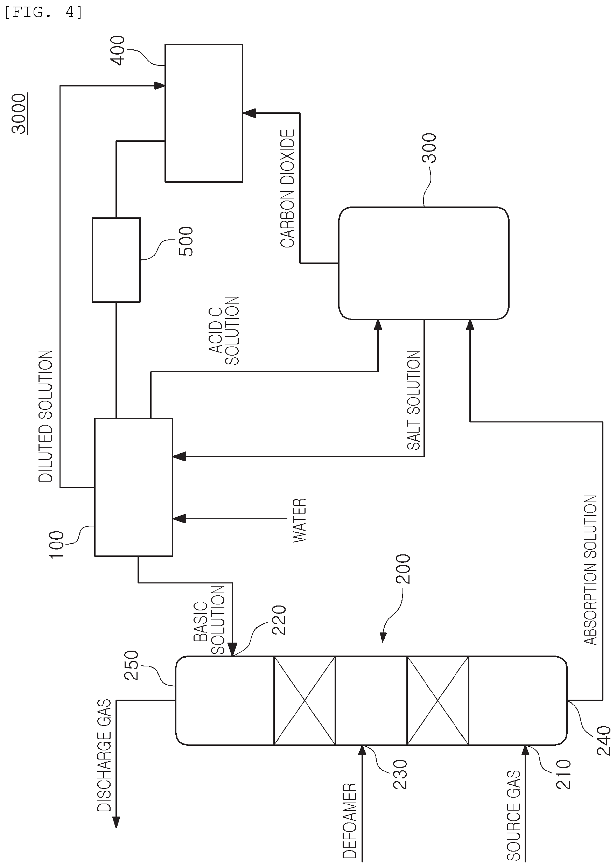

FIG. 4 is a process diagram illustrating a carbon dioxide enrichment system (3000) according to other example embodiments. The description of the carbon dioxide collection system, substantially overlapping the description of the carbon dioxide enrichment system of FIGS. 1 to 3, will be omitted.

Referring to FIG. 4, an electrodialysis device (100) may supply a diluted solution to a plant cultivation facility (400).

The diluted solution may include components (e.g., KNO₃, K₂SO₄, and the like) belonging to inorganic nutrients in a plant culture medium. Furthermore, pH of the diluted solution discharged from the electrodialysis device (100) may range from 5 to 6.5. A range of this pH may be suitable for use in the plant culture medium. Therefore, by supplying the diluted solution to the plant cultivation facility (400), a plant cultivation efficiency of the plant cultivation facility (400) may be improved. A design of the carbon dioxide enrichment system (3000) may be simplified by eliminating a diluted solution treatment process for discharging the diluted solution externally. Furthermore, costs of treating the diluted solution may be reduced.

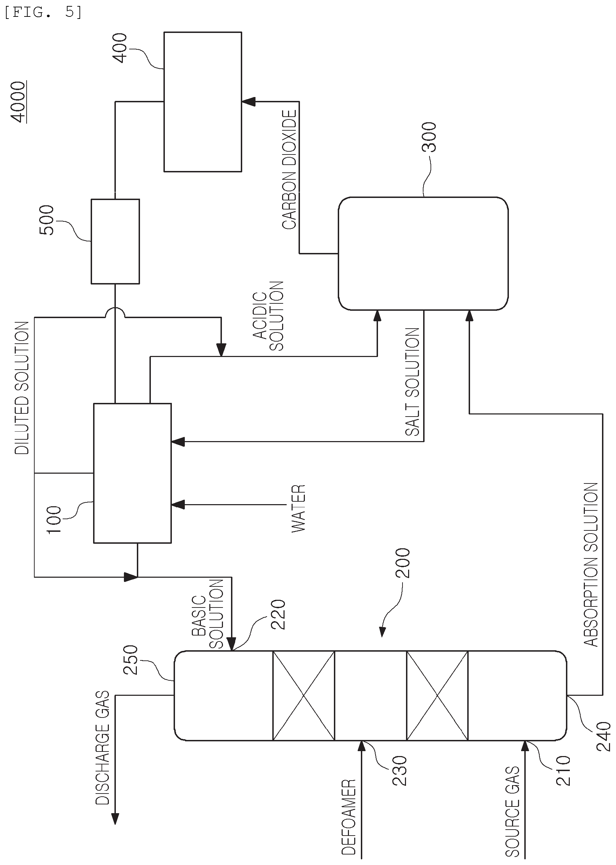

FIG. 5 is a process diagram illustrating a carbon dioxide enrichment system (4000) according to other example embodiments.

Referring to FIG. 5, a diluted solution may be circulated to an absorption device (200) and a separation device (300). This may reduce an amount of water to be lost during an operation of a carbon dioxide enrichment system (4000). Therefore, the amount of water (e.g., make-up water) to be supplied to an electrodialysis device (100) may be reduced. Furthermore, recycling of the diluted solution may reduce costs of processing the diluted solution. This may reduce overall operating costs of the carbon dioxide enrichment system (4000) and a unit cost of producing carbon dioxide supplied to the plant cultivation facility (400).

In addition, a description of components substantially overlapping configurations of the carbon dioxide enrichment systems according to FIGS. 1 to 4 may be equally applied to the carbon dioxide enrichment system according to FIG. 5, and therefore, a detailed description thereof will be omitted.

According to further example embodiments of the present disclosure, a carbon dioxide enrichment method may be provided.

The carbon dioxide enrichment method may include determining whether to separate carbon dioxide, absorbing the carbon dioxide, and supplying the carbon dioxide. This allows the carbon dioxide to be separated from an absorption solution formed by reaction of a source gas containing the carbon dioxide with a basic solution, to be supplied to a plant cultivation facility.

According to example embodiments, the determining whether to separate carbon dioxide may be determined, based on environmental conditions of the plant cultivation facility. More specifically, when the environmental conditions of the plant cultivation facility are not suitable for plant growth (e.g., when carbon dioxide is insufficient), the carbon dioxide may be separated from the absorption solution.

The separation of carbon dioxide may be controlled by an operation of an electrodialysis device or supply of an acidic solution to a separation device.

According to example embodiments, the absorbing the carbon dioxide may be performed using the electrodialysis device, an absorption device, and the separation device. More specifically, the source gas and the basic solution may be supplied to the absorption device to form the absorption solution. Furthermore, the acidic solution and the absorption solution may be supplied to the separation device to separate a salt solution and the carbon dioxide from the absorption solution. In this case, separation of carbon dioxide may be determined, based on the environmental conditions of the plant cultivation facility, as described above. The basic solution required for absorbing carbon dioxide and the acidic solution required for separating carbon dioxide may be obtained by supplying the salt solution to the electrodialysis device and electrolyzing the salt solution.

The electrodialysis device, the absorption device, and the separation device may circulate solutions required for absorption and regeneration of carbon dioxide in the system, as described above, thereby improving an efficiency of absorbing carbon dioxide.

According to example embodiments, the supplying the carbon dioxide may be supplying the separated carbon dioxide to the plant cultivation facility. This allows carbon dioxide to be directly collected from the source gas and supplied to the plant cultivation facility. Furthermore, carbon dioxide may be supplied only when necessary, taking into account the environmental conditions of the plant cultivation facility, thereby improving an efficiency of the carbon dioxide enrichment method.

The present disclosure has been described in more detail through the drawings and examples. However, the configurations described in the drawings and examples described in this specification may be merely embodiments of the present disclosure and do not represent the entire technical scope of the present disclosure. Therefore, it should be understood that various equivalents and modifications may exist as of the time of this application.

### [Acknowledgments]

The present disclosure was derived from research supported by the Industrial Technology Alchemist Project of the Ministry of Trade, Industry and Energy, and the Korea Evaluation & Planning Institute of Industrial Technology (KEIT) in 2023.

(2023000762, Development of a Compact Modular DAC System for Supplying CO2 to Urban Vertical Farms and Turquoise Hydrogen Production Technology Using Microalgae)

This work was supported by the Alchemist Project (2023000762, Development of a compact modular DAC system for supplying CO2 to urban vertical farms and turquoise hydrogen production technology using micro algae) funded By the Ministry of Trade, Industry & Energy (MOTIE, Korea) and Korea Evaluation & Planning of Industrial Technology (KEIT).
1000: CARBON DIOXIDE ENRICHMENT SYSTEM
100: ELECTRODIALYSIS DEVICE
200: ABSORPTION DEVICE
300: SEPARATION DEVICE
400: PLANT CULTIVATION FACILITY
500: CONTROLLER

## Claims

1. A carbon dioxide enrichment system comprising:
an electrodialysis device configured to separate a salt solution into an acidic solution and a basic solution;
an absorption device configured to react the basic solution with a source gas containing carbon dioxide, and to discharge an absorption solution in which the carbon dioxide is absorbed from the source gas;
a separation device configured to react the absorption solution and the acidic solution to separate and discharge the carbon dioxide and the salt solution, and to supply the separated and discharged carbon dioxide to a plant cultivation facility; and
a controller configured to control the separation and discharge of the carbon dioxide, based on environmental conditions of the plant cultivation facility,
wherein the salt solution discharged from the separation device is circulated to the electrodialysis device.

2. The carbon dioxide enrichment system of claim 1, wherein the salt solution includes KCl, KNO₃, K₂SO₄, or a combination thereof, and water (H₂O).

3. The carbon dioxide enrichment system of claim 1, wherein a supply temperature of the salt solution is 20 to 50°C.

4. The carbon dioxide enrichment system of claim 1, wherein the acidic solution includes HCl, HNO₃, H₂SO₄, or a combination thereof.

5. The carbon dioxide enrichment system of claim 1, wherein the basic solution includes KOH.

6. The carbon dioxide enrichment system of claim 5, wherein the basic solution includes 5 to 25 wt% KOH.

7. The carbon dioxide enrichment system of claim 1, wherein the electrodialysis device discharges a diluted solution having a lower salt concentration than the salt solution, and supplies the diluted solution to the plant cultivation facility.

8. The carbon dioxide enrichment system of claim 1, wherein the electrodialysis device discharges a diluted solution having a lower salt concentration than the salt solution, and the diluted solution is circulated to the absorption device and the separation device.

9. The carbon dioxide enrichment system of claim 1, wherein the electrodialysis device is a bipolar electrodialysis device including a bipolar membrane.

10. The carbon dioxide enrichment system of claim 1, wherein the absorption device includes:
a first inlet through which the source gas is supplied, and a second inlet located above the first inlet and through which the basic solution is supplied; and
a first outlet located below the first inlet and configured to discharge the absorption solution.

11. The carbon dioxide enrichment system of claim 10, wherein the absorption device further includes a third inlet located above the first inlet and through which a defoamer is supplied.

12. The carbon dioxide enrichment system of claim 1, wherein the controller is configured to determine whether to operate the electrodialysis device, based on the environmental conditions of the plant cultivation facility.

13. The carbon dioxide enrichment system of claim 12, wherein the controller is configured to determine whether to operate the electrodialysis device by comparing an internal carbon dioxide concentration of the plant cultivation facility and a preset carbon dioxide concentration.

14. The carbon dioxide enrichment system of claim 1, further including an acidic solution storage tank fluidly connected to the electrodialysis device and the separation device, respectively, and an opening/closing valve disposed between the acidic solution storage tank and the separation device and configured to control flow of the acidic solution supplied to the separation device by an opening/closing operation, and
the controller is configured to control the opening/closing operation of the opening/closing valve according to the environmental conditions of the plant cultivation facility.

15. A carbon dioxide enrichment method for separating carbon dioxide from an absorption solution formed by reacting a source gas containing the carbon dioxide with a basic solution, and supplying the separated carbon dioxide to a plant cultivation facility, comprising:
determining whether to separate the carbon dioxide, based on environmental conditions of the plant cultivation facility;
supplying the source gas and the basic solution to an absorption device to form the absorption solution;
supplying the acidic solution and the absorption solution to a separation device to separate a salt solution and the carbon dioxide from the absorption solution;
supplying the salt solution to an electrodialysis device to form the basic solution and an acidic solution, wherein the basic solution is supplied to the absorption device, and the acidic solution is supplied to the separation device; and
supplying the separated carbon dioxide to the plant cultivation facility,
wherein separation of the carbon dioxide is controlled by an operation of the electrodialysis device or supply of the acidic solution to the separation device.
